# DEMANDE DE BREVET EUROPEEN

(11) **EP 1 161 065 A1**
(43) Date de publication de la demande: **05.12.2001**
(21) Numéro de dépôt: 01201968.3
(22) Date de dépôt: 25.05.2001
(51) Int. Cl.: H04M 1/725

(54) **Télécommande pour téléphone mobile et téléphone mobile pouvant être commandé par une télécommande.**

(30) Priorité: 30.05.2000 FR 0006946
(71) Demandeur: Koninklijke Philips Electronics N.V., 5621 BA Eindhoven (NL)
(72) Inventeur: Rosay, Arnaud, 75008 Paris (FR); Simon, Jean-Michel, 75008 Paris (FR)
(74) Mandataire: Chaffraix, Jean

(57) **Abrégé**

L'invention concerne une télécommande (1) pour téléphone mobile (2) ainsi qu'un téléphone mobile (2) pouvant être commandé par une télécommande (1).

La télécommande (1) comprend un émetteur pour émettre vers le téléphone mobile (2) un signal (S2) contenant des données entrées sur clavier (3), un récepteur pour recevoir un signal (S3) contenant des données provenant du téléphone mobile (2) et un module d'affichage (4) pour afficher les données entrées à partir du clavier (3) ou les données contenues dans le signal (S3) reçu par le récepteur.

Le téléphone mobile (2) comprend un récepteur pour recevoir un signal (S2) contenant des données entrées à partir du clavier (3) de la télécommande (1) et un émetteur pour re-émettre, vers la télécommande (1), des données contenues dans un signal (S1) qu'il reçoit.

## Description

L'invention concerne une télécommande pour téléphone mobile ainsi qu'un téléphone mobile pouvant être commandé par une télécommande.

L'invention trouve une application particulièrement avantageuse pour la commande à distance de téléphone mobile installé hors de portée de main de l'utilisateur. Il peut s'agir, par exemple, de la commande à distance de téléphone mobile installé dans un véhicule.

Généralement, lorsqu'un téléphone mobile est installé dans un véhicule, par exemple une automobile, il occupe une position qui ne permet pas au conducteur de l'utiliser facilement. La composition de numéros de téléphone de même que, plus généralement, toute intervention devant être effectuée sur le téléphone mobile sont des opérations délicates pouvant mettre en danger la conduite du véhicule.

Il n'est actuellement pas connu de module de commande à distance pour téléphone mobile. L'invention propose un tel module de façon à pouvoir résoudre les inconvénients mentionnés ci-dessus.

En effet, l'invention concerne une télécommande pour téléphone mobile. La télécommande comprend un clavier de caractères alphanumériques pour entrer des données, un émetteur pour émettre vers le téléphone mobile un signal contenant lesdites données, un récepteur pour recevoir un signal contenant des données provenant du téléphone mobile et un module d'affichage pour afficher, en tout ou partie, les données entrées à partir du clavier ou les données contenues dans le signal reçu par le récepteur.

L'invention concerne également un téléphone mobile comprenant un clavier de caractères alphanumériques pour entrer des données et un module d'affichage pour afficher les données entrées à partir du clavier ainsi que des données contenues dans un signal reçu par le téléphone mobile. Le téléphone mobile comprend un récepteur pour recevoir un signal contenant des données entrées à partir du clavier d'une télécommande et un émetteur pour re-émettre, vers la télécommande, les données contenues dans le signal qu'il reçoit.

L'invention concerne encore un système constitué d'une télécommande et d'un téléphone mobile. La télécommande est une télécommande telle que selon l'invention et le téléphone mobile est un téléphone mobile tel que selon l'invention.

L'invention concerne encore un véhicule automobile comprenant un volant de conduite. Le véhicule comprend un support fixé au volant pour recevoir une télécommande selon l'invention.

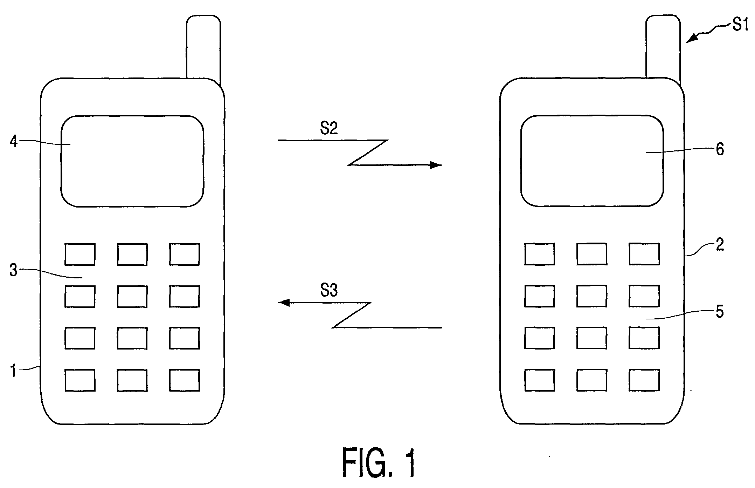

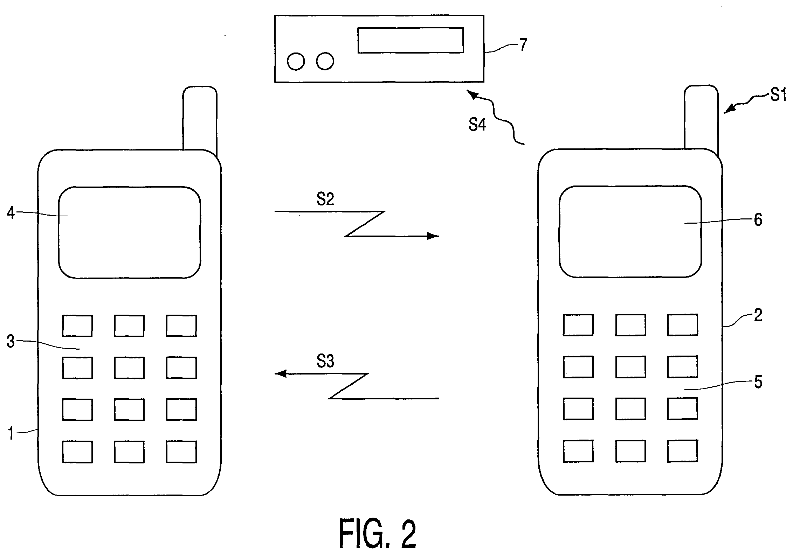

D'autres caractéristiques et avantages de l'invention apparaîtront à la lecture d'un mode de réalisation préférentiel de l'invention décrit aux figures 1 et 2, le tout donné à titre d'exemple non limitatif.
Sur les dessins :
- la figure 1 représente un système d'émission/réception constitué d'une télécommande et d'un téléphone mobile selon l'invention,
- la figure 2 représente un perfectionnement du système représenté en figure 1.

Sur toutes les figures, les mêmes repères désignent les mêmes éléments.

La figure 1 représente un système d'émission/réception constitué d'une télécommande et d'un téléphone mobile selon l'invention.

Le système comprend une télécommande 1 réversible en téléphone mobile et un téléphone mobile 2 réversible en télécommande. La télécommande 1 comprend, entre autres, un clavier à touches alphanumériques 3, un écran d'affichage 4, un circuit émetteur (non représenté sur la figure), et un circuit récepteur (non représenté sur la figure). Le téléphone mobile comprend, entre autres, un clavier à touches alphanumériques 5, un écran d'affichage 6, un circuit émetteur (non représenté sur la figure) et un circuit récepteur (non représenté sur la figure).

Les données entrées à partir du clavier 3 et émises par l'émetteur de la télécommande sont transmises au téléphone mobile 2 par l'intermédiaire d'un signal S2. Selon le mode de réalisation préférentiel de l'invention, le clavier de la télécommande est identique au clavier du téléphone mobile. La pression ou le relâchement d'une touche du clavier de la télécommande produit alors, sur le téléphone mobile, les mêmes effets que si elle ou il était effectué(e) directement sur le téléphone mobile.

Le circuit récepteur de la télécommande 1 permet la réception, pour affichage sur l'écran de la télécommande, de données contenues dansun signal S3 provenant du téléphone mobile 2. Les données contenues dans le signal S3 proviennent d'un signal S1 reçu par le téléphone mobile 2. Le signal S1 comprend, par ailleurs, des données audio qui sont traitées, de façon connue en soi, par un circuit de réception du téléphone mobile 2.

Selon un premier mode de réalisation de l'invention, les signaux S2 et S3 échangés entre la télécommande 1 et le téléphone mobile 2 sont des signaux infrarouges. Les émetteurs de la télécommande et du téléphone mobile comprennent alors des diodes électroluminescentes pour émettre les signaux S2 et S3. La directivité des signaux S2 et S3 peut être améliorée par l'utilisation de lentilles. Selon le mode de réalisation préférentiel de l'invention, le protocole IrDA est utilisé pour l'échange des données entre la télécommande et le téléphone mobile. Comme cela est connu de l'homme de l'art, le protocole IrDA (IrDA pour "Infrared Data Association") consiste en un protocole en couche pour liaison infrarouge tel que défini par I' "Infrared Data Association". Avantageusement, l'utilisation du protocole IrDA permet le rétablissement de communications interrompues pendant un court intervalle de temps.

Selon un deuxième mode de réalisation de l'invention, les émetteurs et les récepteurs fonctionnent aux fréquences de transmission utilisées dans les systèmes de radiocommunication de données communément appelés systèmes RDS (RDS pour " Radio Data System "). Dans ce dernier cas, les signaux S2 et S3 échangés entre la télécommande 1 et le téléphone mobile 2 sont constitués d'une sous-porteuse modulée, par exemple, à 57kHz.

Dans le cadre de l'application de l'invention à la commande d'un téléphone mobile installé dans un véhicule automobile, la télécommande peut être placée sur un support installé à portée de main du conducteur. Ce support peut être, par exemple, installé sur le volant de conduite du véhicule.

La figure 2 représente un perfectionnement du système représenté en figure 1.

Selon ce perfectionnement, les données audio contenues dans le signal S1 reçu par le téléphone mobile 2 sont re-émises vers le récepteur radio 7 du véhicule. Le haut-parleur du téléphone mobile 2 peut alors être déconnecté. Les données audio sont transmises par un signal S4 modulé en fréquence apte à être reçu par le récepteur radio 7.

## Revendications

1. Télécommande (1) pour téléphone mobile (2), **caractérisée en ce qu'**elle comprend un clavier (3) de caractères alphanumériques pour entrer des données, un émetteur pour émettre vers le téléphone mobile (2) un signal contenant lesdites données, un récepteur pour recevoir un signal contenant des données provenant du téléphone mobile (2) et un module d'affichage (4) pour afficher, en tout ou partie, les données entrées à partir du clavier (3) ou les données contenues dans le signal reçu par le récepteur.

2. Télécommande (1) selon la revendication 1, **caractérisée en ce que** le signal (S2) émis par l'émetteur et le signal (S3) reçu par le récepteur sont des signaux infrarouges.

3. Télécommande (1) selon la revendication 2, **caractérisée en ce que** l'émetteur comprend une diode électroluminescente.

4. Télécommande (1) selon la revendication 2 ou 3, **caractérisée en ce que** l'échange de données entre la télécommande (1) et le téléphone mobile (2) est effectué selon le protocole IrDA ("Infrared Data Association").

5. Télécommande (1) selon la revendication 1, **caractérisée en ce que** le signal (S3) reçu par le récepteur et le signal (S2) émis par l'émetteur ont une fréquence choisie parmi les fréquences des signaux utilisés dans les systèmes de radiocommunication de données.

6. Télécommande (1) selon la revendication 5, **caractérisée en ce que** le signal (S3) reçu par le récepteur et le signal (S2) émis par l'émetteur sont des signaux dont la fréquence est modulée à 57kHz.

7. Téléphone mobile (2) comprenant un clavier (5) de caractères alphanumériques pour entrer des données et un module d'affichage (6) pour afficher les données entrées à partir du clavier (5) ainsi que des données contenues dans un signal (S1) reçu par le téléphone mobile (2), **caractérisé en ce qu'**il comprend un récepteur pour recevoir un signal contenant des données entrées à partir du clavier (3) d'une télécommande et un émetteur pour re-émettre, vers la télécommande (1), les données contenues dans le signal (S1) qu'il reçoit.

8. Téléphone mobile (2) selon la revendication 7, **caractérisé en ce que** le signal (S2) reçu par le récepteur et le signal (S3) émis par l'émetteur sont des signaux infrarouges.

9. Téléphone mobile (2) selon la revendication 8, **caractérisé en ce que** l'émetteur comprend une diode électroluminescente.

10. Téléphone mobile (2) selon la revendication 7, **caractérisé en ce que** le signal (S2) reçu par le récepteur et le signal (S3) émis par l'émetteur ont une fréquence choisie parmi les fréquences des signaux utilisés dans les systèmes de radiocommunication de données.

11. Téléphone mobile (2) selon la revendication 10, **caractérisé en ce que** le signal (S2) reçu par le récepteur et le signal (S3) émis par l'émetteur sont des signaux dont la fréquence est modulée à 57kHz.

12. Téléphone mobile (2) selon l'une quelconque des revendications 10 ou 11, **caractérisé en ce qu'**il comprend un émetteur pour re-émettre des données audio contenues dans un signal (S1) qu'il reçoit vers un récepteur radio (7).

13. Système constitué d'une télécommande (1) selon la revendication 2 et d'un téléphone mobile (2) selon la revendication 8.

14. Système constitué d'une télécommande (1) selon la revendication 5 et d'un téléphone mobile (2) selon la revendication 10.

15. Système selon l'une quelconque des revendications 13 ou 14, **caractérisé en ce que** le clavier de la télécommande (1) est identique au clavier du téléphone mobile (2).

16. Véhicule automobile comprenant un volant de conduite, **caractérisé en ce qu'**il comprend un support fixé au volant pour recevoir une télécommande (1) selon l'une quelconque des revendications 1 à 6.
